# EUROPÄISCHE PATENTSCHRIFT

(11) **EP 4 441 656 B1**
(45) Veröffentlichungstag und Bekanntmachung des Hinweises auf die Patenterteilung: **18.02.2026**
(21) Anmeldenummer: 22822272.5
(22) Anmeldetag: 29.11.2022
(51) Int. Cl.: G06K 19/077

(54) **KARTENFÖRMIGER DATENTRÄGER MIT EINER HINTERSPRITZUNGSSCHICHT UND VERFAHREN ZUM HERSTELLEN EINES KARTENFÖRMIGEN DATENTRÄGERS**
CARD-SHAPED DATA CARRIER WITH A BACK-INJECTED LAYER, AND METHOD FOR PRODUCING A CARD-SHAPED DATA CARRIER
SUPPORT DE DONNÉES EN FORME DE CARTE DOTÉ D'UNE COUCHE RÉTRO-INJECTÉE, ET PROCÉDÉ DE PRODUCTION D'UN SUPPORT DE DONNÉES EN FORME DE CARTE

(30) Priorität: 02.12.2021 DE 102021005960
(43) Veröffentlichungstag der Anmeldung: 09.10.2024
(73) Patentinhaber: Giesecke+Devrient ePayments GmbH, 81677 München (DE)
(72) Erfinder: MINKS, Andreas, 83707 Bad Wiessee (DE); TARANTINO, Thomas, 83410 Laufen (DE)
(74) Vertreter: Giesecke+Devrient IP
(86) Internationale Anmeldenummer: PCT/EP2022/025538
(87) Internationale Veröffentlichungsnummer: WO 2023/099031

(56) Entgegenhaltungen:
- DE-A1- 102008 019 571
- DE-A1- 102019 005 934
- US-A1- 2018 339 503
- US-A1- 2020 257 953
- US-A1- 2021 110 231

## Beschreibung

Die vorliegende Erfindung betrifft einen kartenförmigen Datenträger, insbesondere eine Smart Card, und ein Verfahren zum Herstellen eines kartenförmigen Datenträgers.

Aus dem Stand der Technik sind eine Vielzahl von kartenförmigen Datenträgern, beispielsweise Smart Cards, Chipkarten, Integrated-Circuit-Cards, Dual-Interface-Karten, Zugangskarten oder Identifikationskarten, bekannt. Insbesondere die Verwendung von Smart Cards, wie beispielsweise Kreditkarten oder Bezahlkarten, hat sich zur Ausführung von finanziellen Transaktionen etabliert. Ein derartiger kartenförmiger Datenträger weist einen Kartenkörper und einen in den Kartenkörper eingebetteten integrierten Schaltkreis zum Beispiel in Form eines Chipmoduls mit einem Chip auf. Das Chipmodul wird üblicherweise in einer Modulöffnung des Kartenkörpers angeordnet bzw. eingesetzt.

Weiterhin ist es bekannt, für die Herstellung von kartenförmigen Datenträgern unterschiedliche Komponenten für eine kontaktbasierte und/oder kontaktlose Datenübertragung zu verwenden, wie beispielsweise das Chipmodul mit einem Chip und einer Kontaktstruktur zur kontaktbasierten Datenübertragung und/oder weitere Komponenten, wie beispielsweise eine Antenne oder einen Kondensator für eine kontaktlose Datenübertragung.

Im Folgenden werden Chipmodule mit integrierter bzw. gekoppelter Antenne betrachtet, welche sowohl eine kontaktbasierte als auch eine berührungslose oder kontaktlose Datenübertragung bzw. Kommunikation ermöglichen. Beispielsweise können hierdurch kartenförmige Datenträger mit einer RFID-Funktionalität (Radio Frequency Idenfitication) bereitgestellt werden.

Kartenförmige Datenträger mit einer metallischen Oberfläche oder einer metallischen Kernschicht sind besonders unempfindlich und werden als hochwertig angesehen. Deshalb finden zunehmend kartenförmige Datenträger mit innen- oder außenliegender Metallschicht Verbreitung.

Die Funktionsweise eines solchen kartenförmigen Datenträgers besteht darin, dass ein Chipmodul verwendet wird, das selbst eine gekoppelte Antenne, insbesondere eine Spule, aufweist (Coil On Modul). Diese Spule koppelt auf den Kartenkörper mit einer Metallschicht. Dabei kann jedoch die Metallschicht die Kommunikation bzw. Datenübertragung stören oder vollständig behindern. Diese Kopplung funktioniert daher nur dann, wenn unerwünschte Ringschlüsse des magnetischen Flusses unterbunden werden können. Mit anderen Worten sollen störende kapazitive Einflüsse der Metallschicht verhindert werden.

Es ist hierbei bekannt, einen Schlitz zur Unterbrechung von Ringschlüssen in der Metallschicht bzw. zur Verhinderung von Kurzschlussströmen vorzusehen. Allerdings stellt der Schlitz in der Metallschicht eine mechanische Instabilität dar. Insbesondere können die kartenförmigen Datenträger bei einer äußeren Belastung im Bereich des Schlitzes brechen. Auch können an der Metallschicht angebrachte Kunststofffolien im Bereich des Schlitzes aufreißen.

Kartenförmige Datenträger sind beispielhaft aus US 2018/339503 A1, US 2020/257953 A1 oder US 2021/110231 A1 bekannt.

Aufgabe der vorliegenden Erfindung ist es daher, einen kartenförmigen Datenträger, insbesondere eine Smart Card, anzugeben, bei dem eine verbesserte mechanische Stabilisierung des kartenförmigen Datenträgers zur Verfügung gestellt werden kann. Weiterhin ist es Aufgabe der vorliegenden Erfindung, ein Verfahren zum Herstellen eines kartenförmigen Datenträgers anzugeben.

Diese Aufgabe wird durch einen kartenförmigen Datenträger mit den Merkmalen des unabhängigen Anspruchs 1 gelöst. Ferner wird die Aufgabe durch ein Verfahren mit den Merkmalen des Anspruchs 11 gelöst.

Ausgestaltungen und Weiterbildungen der Erfindung sind in den abhängigen Ansprüchen angegeben und in Bezug auf die Beschreibung und die Figuren offenbart. Dabei gelten Merkmale und Details, die im Zusammenhang mit dem erfindungsgemäßen kartenförmigen Datenträger beschrieben sind, auch im Zusammenhang mit dem erfindungsgemäßen Verfahren und jeweils umgekehrt, sodass bezüglich der Offenbarung zu den einzelnen Erfindungsaspekten stets wechselseitig Bezug genommen werden kann.

Im Rahmen der Anmeldung kann die Erfindung bevorzugt für Smart Cards, insbesondere für Kreditkarten und Bezahlkarten, verwendet werden. Hierbei ist bevorzugt die Verwendung für Metallkarten vorgesehen, insbesondere für Vollmetallkarten, Hybrid-Metallkarten mit einer metallischen Schicht und einer Kunststoffschicht, sowie für Metallkarten, die ein- oder beidseitig mit Kunststoff oder Lack beschichtet oder bedruckt sind. Es kann aber auch eine Verwendung für andere RFID-Vorrichtungen, wie beispielsweise Schlüsselkarten, Zugangskarten, Token, Wearables oder Sicherheitsausweise, vorgesehen sein.

Gemäß einem Aspekt der Erfindung wird ein kartenförmiger Datenträger, insbesondere eine Smart Card, bereitgestellt, welcher die folgenden Komponenten umfasst: einen Kartenkörper mit wenigstens einem Anordnungsbereich zur Aufnahme eines Chipmoduls, wobei das Chipmodul in dem Anordnungsbereich des Kartenkörpers angeordnet ist, wobei das Chipmodul wenigstens einen Chip, eine Kontaktstruktur und wenigstens eine Antenne umfasst. Der Kartenkörper ist aus wenigstens zwei Schichten gebildet, wobei eine erste Schicht als Metallschicht mit wenigstens einem Schlitz ausgebildet ist, der sich von einer Umfangsfläche der Metallschicht bis in den Bereich des Anordnungsbereiches für das Chipmodul erstreckt und der sich durch die gesamte Dicke der Metallschicht erstreckt. Eine zweite Schicht ist mittels eines Hinterspritzungsverfahrens als Hinterspritzungsschicht ausgebildet, welche ein Hinterspritzungsmaterial umfasst, wobei die Hinterspritzungsschicht an der Metallschicht derart angeordnet ist, dass der Schlitz der Metallschicht zumindest teilweise mit dem Hinterspritzungsmaterial aufgefüllt ist.

Im Rahmen der Anmeldung ist die Metallschicht diskontinuierlich ausgebildet, wobei die Metallschicht wenigstens einen Schlitz aufweist. Dabei kann der Schlitz als elektrische und/oder mechanische Diskontinuität aufgefasst werden. Insbesondere können für den Schlitz weitere Möglichkeiten zur Unterbrechung von Ringschlüssen in der Metallschicht bzw. zur Verhinderung von Kurzschlussströmen vorgesehen sein. Beispielhaft kann der Schlitz auch als Aussparung, Spalt oder Loch in der Metallschicht ausgebildet sein.

Ferner ist im Rahmen der Anmeldung vorgesehen, dass das Chipmodul wenigstens einen Chip, eine Kontaktstruktur und wenigstens eine Antenne umfasst. Insbesondere ist der Chip über Drähte mit Kontakten der Kontaktstruktur in Verbindung gesetzt. Mit anderen Worten ist der Chip mit der Kontaktstruktur gekoppelt. Die Kontakte der Kontaktstruktur können in ihrer Anzahl, Größe und Position durch internationale Normen festgelegt werden, damit die Funktion der Smart Card in jedem Lesegerät sichergestellt werden kann. Vorteilhafterweise kann mittels des Chipmoduls und insbesondere der Kontaktstruktur eine kontaktbasierte Datenübertragung zwischen der Smart Card und einem Lesegerät hergestellt werden.

Weiterhin umfasst das Chipmodul eine Antenne (als Spule) zur induktiven kontaktlosen Datenübertragung. Die Antenne ist insbesondere mit dem Chip gekoppelt, bzw. ist der Chip an der Antenne angeschlossen. Eine kontaktlose Smart Card kann mit einem Lesegerät durch elektromagnetische Wellen kommunizieren, wobei die Smart Card ähnlich einem Sende- und Empfangsgerät funktionieren kann. Insbesondere erzeugen vom Lesegerät ausgesendete elektromagnetische Wellen ein schwingendes elektromagnetisches Feld, welches beispielsweise in der Spule bzw. Antenne des Chipmoduls eine schwingende elektrische Spannung erzeugt, wodurch der Chip mit Strom versorgt werden kann. Dabei können die Schwingungen der Spannung als Signal aufgefangen und in dem Chip in Daten umgesetzt werden. Diese Daten können wiederum im Chip verarbeitet und in Veränderungen des elektromagnetischen Feldes umgesetzt werden, welche wiederum vom Lesegerät aufgefangen und in Daten umgesetzt werden können. Insgesamt kann daher mittels des Chips, der Kontaktstruktur und der Antenne eine kontaktbasierte und/oder kontaktlose Datenübertragung ermöglicht werden.

Die Erfindung hat den Vorteil, dass die Hinterspritzungsschicht eine Art Schutzschicht für die Metallschicht bilden kann und somit für eine mechanische Stabilisierung der Metallschicht sorgen kann. Aufgrund der Hinterspritzung der Metallschicht sind bevorzugt keine weiteren Zwischenschichten, wie beispielsweise Klebstoffschichten, benötigt und die Metallschicht kann mit der Hinterspritzungsschicht einen stabilen Verbund ausbilden. Dies kann insbesondere auch die Herstellung des kartenförmigen Datenträgers erleichtern, da Klebe- oder Laminiervorgänge entfallen können.

Im Rahmen der Anmeldung ist auch vorgesehen, dass zwischen der Metallschicht und der Hinterspritzungsschicht wenigstens eine funktionale Schicht oder alternativ beliebig viele weitere Zwischenschichten angeordnet sein können. Mit anderen Worten kann die Anordnung der Hinterspritzungsschicht an der Metallschicht hierbei über die Zwischenschicht(en) erfolgen. Insbesondere kann hierbei die Hinterspritzungsschicht über die Zwischenschicht(en) derart an der Metallschicht angeordnet sein, dass der Schlitz der Metallschicht zumindest teilweise mit dem Hinterspritzungsmaterial aufgefüllt ist. Hierbei ist es für den Fachmann verständlich, dass etwaige Zwischenschichten entsprechende Durchgänge, beispielsweise in Form von Löchern oder entsprechenden Schlitzen, aufweisen, damit das Hinterspritzungsmaterial durch die Zwischenschichten hindurch in den Schlitz der Metallschicht zur mechanischen Stabilisierung fließen kann.

Zusätzlich kann aufgrund der Hinterspritzung der Metallschicht der Vorteil erzielt werden, dass Hinterspritzungsmaterial zumindest teilweise, insbesondere vollständig, in den Schlitz der Metallschicht fließt und damit der Schlitz der Metallschicht zumindest teilweise, insbesondere vollständig, mit dem Hinterspritzungsmaterial aufgefüllt wird. Dies sorgt zusätzlich für eine mechanische Stabilisierung des Schlitzes der Metallschicht. Insgesamt kann mittels der erfindungsgemäßen Hinterspritzungsschicht einerseits eine vollständige mechanische Stabilisierung der Metallschicht und andererseits auch eine zusätzliche mechanische Stabilisierung des Schlitzes der Metallschicht erreicht werden.

Vorzugsweise kann vorgesehen sein, dass sich die Hinterspritzungsschicht zumindest teilweise, insbesondere vollständig, entlang der Metallschicht erstreckt. Dies hat den Vorteil, dass die Hinterspritzungsschicht als Schutzschicht für die Metallschicht ausgebildet sein kann. Insbesondere bei einer vollständigen Erstreckung der Hinterspritzungsschicht entlang der Metallschicht kann eine vollständige mechanische Stabilisierung erzielt werden. Beispielhaft kann die Hinterspritzungsschicht transparent ausgebildet sein. Bevorzugt kann ein Kunststoffmaterial für das Hinterspritzungsmaterial der Hinterspritzungsschicht vorgesehen sein. Wenn der Kartenkörper aus insgesamt zwei Schichten gebildet ist, kann die Dicke der Hinterspritzungsschicht und der Metallschicht beispielsweise eine normierte Kartendicke von 840 µm betragen. Alternativ können noch weitere Schichten für den Kartenkörper vorgesehen sein, wie beispielsweise eine weitere Schicht aus Kunststoff oder Holz, und dementsprechend kann die Hinterspritzungsschicht und/ oder die Metallschicht dünner ausgebildet werden.

Bevorzugt kann vorgesehen sein, dass der Anordnungsbereich zur Aufnahme des Chipmoduls durch eine Aussparung im Kartenkörper, insbesondere in der Metallschicht, gebildet ist, in der das Chipmodul aufgenommen ist. Das Chipmodul kann in der Aussparung, wie beispielsweise einer Kavität oder Modulöffnung, des Kartenkörpers bzw. der Metallschicht angeordnet bzw. eingesetzt werden. Dies hat den Vorteil einer geschützten und platzsparenden Anordnung des Chipmoduls innerhalb des Kartenkörpers des kartenförmigen Datenträgers. Beispielhaft kann vorgesehen sein, dass die Aussparung in der Metallschicht als durchgehende Modulöffnung ausgebildet ist, wobei sich der Schlitz der Metallschicht von der Umfangsfläche der Metallschicht bis in den Bereich der Aussparung und durch die gesamte Dicke der Metallschicht erstreckt. Bevorzugt kann hierbei der Chip und die Kontaktstruktur des Chipmoduls innerhalb der Aussparung angeordnet werden. Es ist auch denkbar, dass die Antenne des Chipmoduls im Anordnungsbereich angeordnet wird oder in einer funktionalen Schicht angeordnet wird. Durch die Auslagerung der Antenne aus dem Anordnungsbereich kann eine größere Antenne für eine verbesserte RFID-Funktionalität verwendet werden.

Alternativ oder zusätzlich kann vorgesehen sein, dass die Hinterspritzungsschicht eine ausgeformte Kavität zur Aufnahme von einer Elektronik des Chipmoduls aufweist, insbesondere wobei die Kavität unterhalb des Anordnungsbereichs zur Aufnahme des Chipmoduls angeordnet ist. Beispielhaft kann unterhalb der Aussparung bzw. der Modulöffnung für das Chipmodul in der Metallschicht eine Kavität in der Hinterspritzungsschicht angeordnet sein. In der Kavität können bevorzugt elektronische Komponenten des Chipmoduls aufgenommen und geschützt gelagert werden. Die Ausformung der Kavität kann bevorzugt bei der Anwendung des Hinterspritzungsverfahrens erfolgen. Somit kann die Kavität auf einfache Weise während der Hinterspritzung ausgeformt werden und es kann auf zusätzliche Fräsvorgänge zur Ausformung der Kavität verzichtet werden. Insgesamt kann damit die Herstellung des kartenförmigen Datenträgers weiter vereinfacht werden.

In einer besonders bevorzugten Ausführungsform kann vorgesehen sein, dass die Metallschicht wenigstens eine Ausnehmung aufweist, wobei die Ausnehmung der Metallschicht zumindest teilweise mit dem Hinterspritzungsmaterial aufgefüllt ist. Generell können mehrere Ausnehmungen in der Metallschicht vorgesehen werden. Die Ausnehmungen können beispielsweise als durchgehende Löcher in der Metallschicht ausgebildet sein. Dies hat den Vorteil, dass bei der Anordnung der Hinterspritzungsschicht an der Metallschicht mittels des Hinterspritzungsverfahrens die Ausnehmung oder die Ausnehmungen der Metallschicht zumindest teilweise mit dem Hinterspritzungsmaterial aufgefüllt werden. Insbesondere kann dadurch eine verbesserte Verankerung des Hinterspritzungsmaterials an der Metallschicht erzielt werden. Weiterhin kann durch die Ausnehmungen generell die mechanische Stabilisierung verbessert werden.

Bevorzugt kann vorgesehen sein, dass die Ausnehmung im Bereich des Schlitzes angeordnet ist. Dies hat den Vorteil, dass insbesondere im Bereich des Schlitzes über die Ausnehmung eine zusätzliche Verbesserung der mechanischen Stabilität erzielt werden kann. Beispielsweise kann vorgesehen sein, dass mehrere Ausnehmungen entlang des Schlitzes angeordnet werden. Bevorzugt können jeweils zwei Ausnehmungen rechtsseitig und linksseitig des Schlitzes angeordnet werden.

Vorzugsweise kann vorgesehen sein, dass die Ausnehmung kreisförmig ausgebildet ist oder dass mehrere Ausnehmungen vorgesehen sind, wodurch ein optisches Logo darstellbar ist. Generell kann die Ausnehmung oder die mehreren Ausnehmungen jegliche geometrische Form aufweisen. Beispielhaft kann die geometrische Form der Ausnehmung oder der Ausnehmungen an die optische Gestaltung des kartenförmigen Datenträgers flexibel angepasst werden. Als Beispiel kann mittels der Ausnehmungen ein Logo einer Bank oder ein kundenspezifisches Design dargestellt werden.

Vorteilhafterweise kann vorgesehen sein, dass die Metallschicht eine außenliegende Schicht des kartenförmigen Datenträgers bildet oder dass eine dritte außenliegende Schicht vorgesehen ist, welche die Metallschicht bedeckt. Wenn die außenliegende Schicht des kartenförmigen Datenträgers durch die Metallschicht gebildet ist, kann der kartenförmige Datenträger beispielsweise als Metal Face Card ausgebildet sein. Alternativ kann eine dritte außenliegende, insbesondere transparent ausgebildete, Schicht die Metallschicht bedecken. Die dritte Schicht kann beispielsweise aus Kunststoff oder alternativ auch aus Holz gebildet sein. Wenn eine dritte Schicht vorhanden ist, kann der kartenförmige Datenträger beispielsweise als Metal Core Card mit innenliegender Metallschicht ausgebildet sein. Generell können je nach Anwendungsfall beliebig viele Schichten für den Kartenkörper vorgesehen sein, beispielsweise eine Druckschicht mit optischen Merkmalen oder eine Overlay-Schicht. In derartigen Schichten können beispielsweise Sicherheitsmerkmale im optischen, IR- und/oder UV-Bereich sowie Gestaltungsmerkmale angeordnet werden. Zudem können kundenspezifische Informationen zur Verfügung gestellt werden.

Besonders bevorzugt kann vorgesehen sein, dass die dritte außenliegende Schicht mittels eines Hinterspritzungsverfahrens als zweite Hinterspritzungsschicht ausgebildet ist, welche ein Hinterspritzungsmaterial umfasst, wobei die zweite Hinterspritzungsschicht an der Metallschicht derart angeordnet ist, dass der Schlitz der Metallschicht zumindest teilweise mit dem Hinterspritzungsmaterial aufgefüllt ist. Mit anderen Worten kann zusätzlich zur Hinterspritzungsschicht eine zweite Hinterspritzungsschicht vorgesehen werden, wobei insbesondere die zweite Hinterspritzungsschicht analog zur Hinterspritzungsschicht ausgebildet ist. Dabei sind die Hinterspritzungsschichten bevorzugt auf beiden Seiten der Metallschicht angeordnet, um eine Metal Core Card mit innenliegender Metallschicht auszubilden. Beispielhaft kann für die Hinterspritzungsschicht und die zweite Hinterspritzungsschicht das gleiche Hinterspritzungsmaterial verwendet werden. Alternativ können unterschiedliche Hinterspritzungsmaterialien je nach Anwendungsfall verwendet werden. Die Verwendung einer zweiten Hinterspritzungsschicht hat insbesondere den Vorteil, dass der Schlitz der Metallschicht von beiden Seiten teilweise von dem jeweiligen Hinterspritzungsmaterial aufgefüllt werden kann, wodurch im Wesentlichen eine vollständige Auffüllung des Schlitzes garantiert werden kann. Dies ermöglicht vorteilhafterweise eine vollständige mechanische Stabilisierung des Schlitzes.

Besonders bevorzugt kann vorgesehen sein, dass zwischen der dritten außenliegende Schicht und der Metallschicht eine Klebstoffschicht angeordnet ist. Die Klebstoffschicht weist der Vorteil einer verbesserten Haftung zwischen den einzelnen Schichten auf, weshalb die Metallschicht dauerhaft mit der dritten außenliegenden Schicht verbunden werden kann.

Erfindungsgemäß ist vorgesehen, dass zwischen der Metallschicht und der Hinterspritzungsschicht eine funktionale Schicht angeordnet ist, an welcher wenigstens eine Komponente des Chipmoduls, insbesondere die Antenne des Chipmoduls, angeordnet ist, wobei die funktionale Schicht einen dem Schlitz der Metallschicht entsprechenden Schlitz aufweist, der sich von einer Umfangsfläche der funktionalen Schicht bis in den Bereich des Anordnungsbereiches für das Chipmodul erstreckt und der sich durch die gesamte Dicke der funktionalen Schicht erstreckt. Mit anderen Worten kann sich der Schlitz der funktionalen Schicht unterhalb und entlang des Schlitzes der Metallschicht erstrecken. Insbesondere ist der Schlitz der funktionalen Schicht analog zu dem Schlitz der Metallschicht ausgebildet. Hierdurch wird sichergestellt, dass bei dem Hinterspritzungsverfahren das Hinterspritzungsmaterial durch den Schlitz der funktionalen Schicht in den Schlitz der Metallschicht fließt und den Schlitz der Metallschicht zumindest teilweise auffüllen kann. Beispielhaft kann die funktionale Schicht mit der Metallschicht vor dem Hinterspritzungsverfahren in einem separaten Verfahrensschritt verbunden werden, insbesondere mittels einer Klebstoffschicht. Die funktionale Schicht kann optional weitere elektronische Komponenten oder auch eine Ferritschicht umfassen. Beispielhaft kann durch die Anordnung der Antenne an der funktionalen Schicht eine vergrößerte Antenne zur Verbesserung der RFID-Funktionalität vorgesehen werden. Anschließend an die Verbindung der funktionalen Schicht mit der Metallschicht wird mittels des Hinterspritzungsverfahrens die Hinterspritzungsschicht an der funktionalen Schicht als Zwischenschicht angeordnet, wobei das Hinterspritzungsmaterial über den Schlitz der funktionalen Schicht in den Schlitz der Metallschicht fließen kann und diesen auffüllen kann.

Gemäß einem zweiten Aspekt der Erfindung wird ein Verfahren zum Herstellen eines kartenförmigen Datenträgers, insbesondere einer Smart Card, nach einer der vorhergehenden Ausführungsformen vorgesehen, wobei das Verfahren die folgenden Schritte umfasst:
- Bereitstellen der ersten Schicht als Metallschicht mit einem Schlitz,
- Anordnen des Chipmoduls in dem Anordnungsbereich;
- Hinterspritzen der Metallschicht zur Ausbildung der zweiten Schicht als Hinterspritzungsschicht, wobei die Hinterspritzungsschicht an der Metallschicht derart angeordnet wird, dass der Schlitz der Metallschicht zumindest teilweise mit dem Hinterspritzungsmaterial aufgefüllt wird.

Bevorzugt können weitere Schritte für das Verfahren zum Herstellen des kartenförmigen Datenträgers vorgesehen werden. Beispielhaft kann das Chipmodul in einer Aussparung im Kartenkörper, insbesondere in der Metallschicht, angeordnet werden. Weiterhin kann in der Hinterspritzungsschicht eine Kavität zur Aufnahme von einer Elektronik des Chipmoduls ausgeformt werden. Ferner kann in der Metallschicht wenigstens eine Ausnehmung angeordnet werden, wobei die Ausnehmung während des Hinterspritzungsverfahrens zumindest teilweise mit dem Hinterspritzungsmaterial aufgefüllt wird. Die Ausnehmung kann beispielhaft im Bereich des Schlitzes der Metallschicht angeordnet werden. Ferner kann an der Metallschicht eine dritte außenliegende Schicht angeordnet werden. Diese dritte außenliegende Schicht kann beispielsweise analog zu der Hinterspritzungsschicht mittels eines Hinterspritzungsverfahrens als zweite Hinterspritzungsschicht ausgebildet werden, wobei der Schlitz der Metallschicht zumindest teilweise mit dem Hinterspritzungsmaterial aufgefüllt wird. Alternativ kann zwischen der dritten außenliegenden Schicht und der Metallschicht eine Klebstoffschicht angeordnet werden.

Insgesamt weist somit das erfindungsgemäße Verfahren die gleichen Vorteile auf, wie sie im Hinblick auf den erfindungsgemäßen kartenförmigen Datenträger erläutert wurden.

Die vorliegende Erfindung wird nachfolgend mit Bezug auf die beiliegenden Figuren beispielhaft im Rahmen von Ausführungsformen beschrieben. Selbstverständlich können einzelne Merkmale der Ausführungsformen, sofern technisch sinnvoll, frei miteinander kombiniert werden, ohne den Rahmen der vorliegenden Erfindung zu verlassen. Elemente mit gleicher Funktion und Wirkungsweise sind in den Figuren mit denselben Bezugszeichen versehen. Die Figuren zeigen nachfolgend schematisch:
Figur 1 eine Draufsicht auf einen kartenförmigen Datenträger nach einem nicht erfindungsgemäßen Ausführungsbeispiel;
Figur 2 eine Querschnittsansicht des kartenförmigen Datenträgers nach Figur 1;
Figur 3 eine Querschnittsansicht eines kartenförmigen Datenträgers nach einem erfindungsgemäßen Ausführungsbeispiel,
Figur 4 eine Draufsicht auf einen kartenförmigen Datenträger nach einem erfindungsgemäßen Ausführungsbeispiel, und
Figur 5 eine schematische Ansicht für ein Verfahren zum Herstellen eines kartenförmigen Datenträgers nach einem erfindungsgemäßen Ausführungsbeispiel.

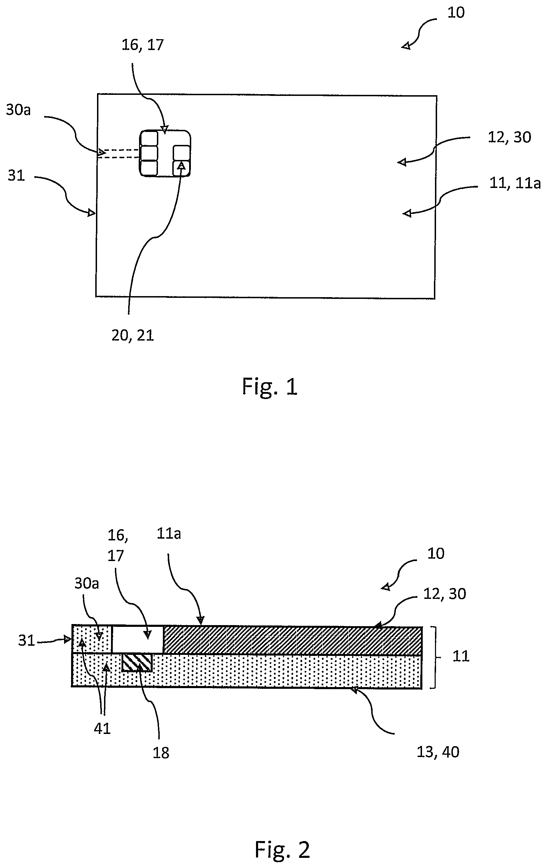

Figur 1 zeigt eine Draufsicht auf einen kartenförmigen Datenträger 10. Der kartenförmige Datenträger 10 ist beispielhaft als Smart Card, insbesondere als Kreditkarte, ausgebildet und umfasst die nachfolgenden Komponenten.

Der kartenförmige Datenträger 10 weist einen rechteckigen Kartenkörper 11 mit einer Oberfläche 11a auf. Insbesondere weist der Kartenkörper 11 des kartenförmigen Datenträgers 10 einen nicht dargestellten Schichtaufbau aus. Mit anderen Worten ist der Kartenkörper 11 aus mehreren einzelnen Schichten gebildet, welche übereinandergestapelt angeordnet sind. Hierbei ist eine erste Schicht 12 und eine nicht dargestellte zweite Schicht 13 für den Kartenkörper 11 vorgesehen. Insbesondere ist die Oberfläche 11a des Kartenkörpers 11 als Oberfläche der ersten Schicht 12 gebildet. Beispielhaft kann die erste Schicht 12 als Metallschicht 30 ausgebildet sein. Die zweite nicht dargestellte Schicht 13 kann als Hinterspritzungsschicht 40 ausgebildet sein. Weitere Details hierzu sind in Bezug auf Figur 2 beschrieben.

Ferner ist ein elektronisches Chipmodul 20 mit wenigstens einem nicht dargestellten Chip und einer Kontaktstruktur 21 vorgesehen. Insbesondere ist die Kontaktstruktur 21 mit dem Chip gekoppelt. Somit kann eine kontaktbasierte Datenübertragung zwischen der Smart Card und einem Lesegerät hergestellt werden. Das Chipmodul 20 umfasst weiterhin eine nicht dargestellte Antenne (als Spule) zur induktiven kontaktlosen Datenübertragung. Beispielhaft kann die Antenne in die zweite Schicht 13 als Hinterspritzungsschicht 40 eingebettet sein, wobei die Antenne mit dem Chip des Chipmoduls 20 gekoppelt ist. Insgesamt kann daher das Chipmodul 20 eine kontaktbasierte und/oder kontaktlose Datenübertragung ermöglichen.

Der Kartenkörper 11 des kartenförmigen Datenträgers 10 weist einen Anordnungsbereich 16 zur Aufnahme des Chipmoduls 20 auf, wobei das Chipmodul 20 in dem Anordnungsbereich 16 des Kartenkörpers 11 angeordnet ist. Besonders bevorzugt ist vorgesehen, dass der Chip und die Kontaktstruktur 21 des Chipmoduls 20 im Anordnungsbereich 16 des Kartenkörpers 11 angeordnet ist. Es kann auch vorgesehen sein, dass die Antenne des Chipmoduls 20 im Anordnungsbereich 16 oder in einer funktionalen Schicht angeordnet ist. Beispielhaft ist der Anordnungsbereich 16 durch eine Aussparung 17 im Kartenkörper 11 gebildet, in dem das Chipmodul 20 aufgenommen und somit geschützt gelagert ist. Insbesondere ist vorgesehen, dass der Anordnungsbereich 16 durch eine Aussparung 17 in der ersten Schicht 12 als Metallschicht 30 gebildet ist. Mit anderen Worten ist das Chipmodul 20 an der Oberfläche 11a des Kartenkörpers 11 in der ersten Schicht 12 innerhalb der Aussparung 17 angeordnet. Anders gesagt stellt die Aussparung 17 in der ersten Schicht 12 eine Modulöffnung für das Chipmodul 20 dar.

Die Metallschicht 30 der ersten Schicht 12 weist einen Schlitz 30a auf, der sich von einer Umfangsfläche 31 der Metallschicht 30 bis in den Bereich des Anordnungsbereiches 16 für das Chipmodul 20 erstreckt und der sich durch die gesamte Dicke der Metallschicht 30 erstreckt. Der Schlitz 30a sorgt für eine Unterbrechung von nachteiligen Ringschlüssen in der Metallschicht 30 bzw. zur Verhinderung von Kurzschlussströmen. Aufgrund des Schlitzes 30a kann die RFID-Funktionalität der Smart Card garantiert werden.

Die nicht dargestellte zweite Schicht 13 ist mittels eines Hinterspritzungsverfahrens als Hinterspritzungsschicht 40 ausgebildet, welche ein Hinterspritzungsmaterial 41 umfasst, wobei die Hinterspritzungsschicht 40 an der Metallschicht 30 derart angeordnet ist, dass der Schlitz 30a der Metallschicht 30 zumindest teilweise mit dem Hinterspritzungsmaterial 41 aufgefüllt ist. Insbesondere erstreckt sich die Hinterspritzungsschicht 40 vollständig entlang der Metallschicht 30. Die Hinterspritzungsschicht 40 bildet vorteilhafterweise eine Art Schutzschicht für die Metallschicht 30 und sorgt somit für eine mechanische Stabilisierung der Metallschicht 30. Zusätzlich kann aufgrund der Hinterspritzung der Metallschicht 30 der Vorteil erzielt werden, dass das Hinterspritzungsmaterial 41 zumindest teilweise, insbesondere vollständig, in den Schlitz 30a der Metallschicht 30 fließt und damit der Schlitz 30a der Metallschicht 30 zumindest teilweise, insbesondere vollständig, mit dem Hinterspritzungsmaterial 41 aufgefüllt wird. Dies ist beispielhaft in Bezug auf Figur 2 dargestellt. Folglich kann eine mechanische Stabilisierung des Schlitzes 30a der Metallschicht 30 erzielt werden.

Weiterhin kann die Hinterspritzungsschicht 40 eine nicht dargestellte ausgeformte Kavität 18 zur Aufnahme von einer Elektronik des Chipmoduls 20 aufweisen, insbesondere wobei die Kavität 18 unterhalb des Anordnungsbereichs 16 zur Aufnahme des Chipmoduls 20 angeordnet ist.

Beispielhaft bildet die Metallschicht 30 eine außenliegende Schicht des kartenförmigen Datenträgers 10. Damit ist der kartenförmige Datenträger 10 als Metal Face Card ausgebildet.

Figur 2 zeigt eine Querschnittsansicht des kartenförmigen Datenträgers 10 nach Figur 1. Der kartenförmige Datenträger 10 ist anlog zu Figur 1 aufgebaut. Insbesondere ist in Figur 2 der Schichtaufbau des Kartenkörpers 11 mit der ersten Schicht 12 als Metallschicht 30 und der darunterliegenden zweiten Schicht 13 als Hinterspritzungsschicht 40 erkennbar. Weiterhin ist erkennbar, dass der Schlitz 30a der Metallschicht 30 vollständig von dem Hinterspritzungsmaterial 41 der Hinterspritzungsschicht 40 aufgefüllt und daher mechanisch stabilisiert ist.

Ferner ist in Figur 2 die Kavität 18 erkennbar, welche in der Hinterspritzungsschicht 40 ausgeformt ist. Beispielhaft ist unterhalb der Aussparung 17 bzw. der Modulöffnung für das Chipmodul 20 in der Metallschicht 30 die Kavität 18 in der Hinterspritzungsschicht 40 angeordnet. In der Kavität 18 können bevorzugt elektronische Komponenten des Chipmoduls 20 aufgenommen und geschützt gelagert werden. Die Ausformung der Kavität 18 kann bevorzugt bei der Anwendung des Hinterspritzungsverfahrens zur Ausbildung der Hinterspritzungsschicht 40 erfolgen.

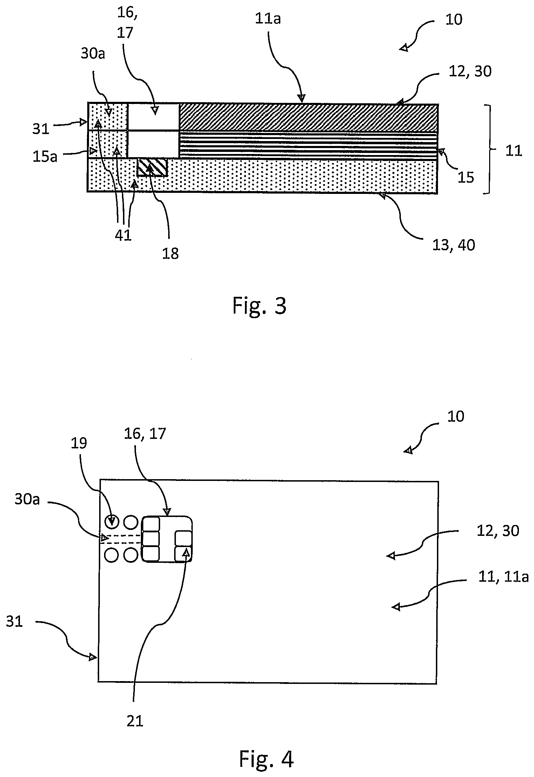

Figur 3 zeigt eine Querschnittsansicht eines kartenförmigen Datenträgers 10 nach einem erfindungsgemäßen Ausführungsbeispiel. Der kartenförmige Datenträger 10 ist im Wesentlichen anlog zu Figur 2 aufgebaut. Im Unterschied zu Figur 2 ist zwischen der Metallschicht 30 und der Hinterspritzungsschicht 40 eine funktionale Schicht 15 angeordnet. Der Kartenkörper 11 weist daher drei Schichten auf, nämlich die erste Schicht 12 als Metallschicht 30, die funktionale Schicht 15 und die zweite Schicht 13 als Hinterspritzungsschicht 40. Die funktionale Schicht 15 erstreckt sich dabei vollständig entlang der Metallschicht 30 bzw. der Hinterspritzungsschicht 40. An der funktionalen Schicht 15 ist die nicht dargestellte Antenne des Chipmoduls 20 angeordnet. Insbesondere ist die nicht dargestellte Antenne in die funktionale Schicht 15 eingebettet oder eingefräst. Folglich kann durch die Auslagerung der Antenne aus dem Anordnungsbereich 16 eine größere Antenne zur Verbesserung der RFID-Funktionalität verwendet werden.

Die funktionale Schicht 15 weist einen dem Schlitz 30a der Metallschicht 30 entsprechenden Schlitz 15a auf, der sich von der Umfangsfläche der funktionalen Schicht 15 bis in den Bereich des Anordnungsbereiches 16 für das Chipmodul 20 erstreckt und der sich durch die gesamte Dicke der funktionalen Schicht 15 erstreckt. Mit anderen Worten kann sich der Schlitz 15a der funktionalen Schicht 15 unterhalb und entlang des Schlitzes 30a der Metallschicht 30 erstrecken. Insbesondere ist der Schlitz 15a der funktionalen Schicht 15 analog zu dem Schlitz 30a der Metallschicht 30 ausgebildet. Hierdurch wird sichergestellt, dass bei dem Hinterspritzungsverfahren das Hinterspritzungsmaterial 41 durch den Schlitz 15a der funktionalen Schicht 15 in den Schlitz 30a der Metallschicht 30 fließt und den Schlitz 30a der Metallschicht 30 zumindest teilweise auffüllen kann. In Figur 3 ist erkennbar, dass sowohl der Schlitz 15a der funktionalen Schicht 15 als auch der Schlitz 30a der Metallschicht 30 mit dem Hinterspritzungsmaterial 41 aufgefüllt ist.

Beispielhaft kann die funktionale Schicht 15 mit der Metallschicht 30 vor dem Hinterspritzungsverfahren in einem separaten Verfahrensschritt verbunden werden, insbesondere mittels einer Klebstoffschicht. Anschließend an die Verbindung der funktionalen Schicht 15 mit der Metallschicht 30 wird mittels des Hinterspritzungsverfahrens die Hinterspritzungsschicht 40 an der funktionalen Schicht 15 als Zwischenschicht und somit auch an der Metallschicht 30 angeordnet, wobei das Hinterspritzungsmaterial 41 über den Schlitz 15a der funktionalen Schicht 15 in den Schlitz 30a der Metallschicht 30 fließen kann.

Wie in Figur 3 erkennbar, ist der Anordnungsbereich 16 zur Aufnahme des Chipmoduls 20 durch eine Aussparung 17 gebildet, welche sich durch die Metallschicht 30 und die darunter liegende funktionale Schicht 15 erstreckt. Mit anderen Worten bildet die Aussparung 17 eine Modulöffnung innerhalb der Metallschicht 30 und der funktionalen Schicht 15.

Ferner ist in Figur 3 die Kavität 18 erkennbar, welche in der Hinterspritzungsschicht 40 ausgeformt ist. Beispielhaft ist unterhalb der Aussparung 17 bzw. der Modulöffnung für das Chipmodul 20 in der Metallschicht 30 und der funktionalen Schicht 15 die Kavität 18 in der Hinterspritzungsschicht 40 angeordnet. In der Kavität 18 können bevorzugt elektronische Komponenten des Chipmoduls 20 aufgenommen und geschützt gelagert werden.

Figur 4 zeigt eine Draufsicht auf einen kartenförmigen Datenträger 10 nach einem weiteren erfindungsgemäßen Ausführungsbeispiel. Der kartenförmige Datenträger 10 kann beispielhaft gemäß Figur 2 nicht erfindungsgemäß oder gemäß Figur 3 erfindungsgemäß ausgebildet sein.

Im Unterschied zu Figur 2 oder Figur 3 weist die Metallschicht 30 des kartenförmigen Datenträgers 10 gemäß Figur 4 vier Ausnehmungen 19 auf, welche zumindest teilweise mit dem Hinterspritzungsmaterial 41 aufgefüllt sind. Die Ausnehmungen 19 sind im Bereich des Schlitzes 30a angeordnet und beispielhaft kreisförmig ausgebildet. Beispielsweise sind jeweils zwei Ausnehmungen 19 rechtsseitig und linksseitig des Schlitzes 30a angeordnet.

Die Ausnehmungen 19 können beispielsweise als durchgehende Löcher in der Metallschicht 30 ausgebildet sein. Dies hat insbesondere in Bezug auf Figur 2 den Vorteil, dass bei der Anordnung der Hinterspritzungsschicht 40 an der Metallschicht 30 mittels des Hinterspritzungsverfahrens die Ausnehmungen 19 der Metallschicht 30 zumindest teilweise mit dem Hinterspritzungsmaterial 41 aufgefüllt werden. Insbesondere kann dadurch eine verbesserte Verankerung des Hinterspritzungsmaterials 41 an der Metallschicht 30 erzielt werden. Wenn gemäß Figur 3 eine funktionale Schicht 15 als Zwischenschicht vorgesehen ist, weist die funktionale Schicht 15 analoge Ausnehmungen 19 auf, damit das Hinterspritzungsmaterial 41 durch die Ausnehmungen der funktionalen Schicht 15 in die Ausnehmungen 19 der Metallschicht 30 fließen kann und die Ausnehmungen der Metallschicht 30 zumindest teilweise auffüllen kann.

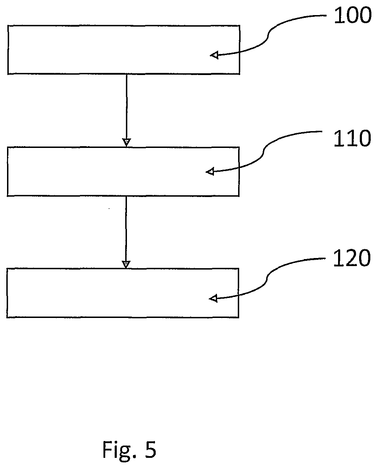

Figur 5 zeigt eine schematische Ansicht für ein Verfahren zum Herstellen eines kartenförmigen Datenträgers nach einem erfindungsgemäßen Ausführungsbeispiel. Insbesondere können die kartenförmigen Datenträger gemäß den Figuren 1 bis 4 hergestellt werden. Das Verfahren umfasst beispielhaft die nachfolgenden Schritte und kann gegebenenfalls noch weitere Verfahrensschritte aufweisen.

In einem ersten Schritt 100 wird die erste Schicht 12 als Metallschicht 30 mit dem Schlitz 30a bereitgestellt. In einem zweiten Schritt 110 wird das Chipmodul 20 in dem Anordnungsbereich 16 angeordnet. Beispielhaft kann in einem zusätzlichen Zwischenschritt an der Metallschicht 30 eine funktionale Schicht 15 angeordnet werden. In einem dritten Schritt 120 wird die Metallschicht 30 (oder gegebenenfalls die funktionale Schicht als Zwischenschicht) zur Ausbildung der zweiten Schicht 13 als Hinterspritzungsschicht 40 hinterspritzt, wobei die Hinterspritzungsschicht 40 an der Metallschicht 30 derart angeordnet wird, dass der Schlitz 30a der Metallschicht 30 zumindest teilweise mit dem Hinterspritzungsmaterial 41 aufgefüllt wird.

### Bezugszeichenliste

- 10: kartenförmiger Datenträger
- 11: Kartenkörper
- 11a: Oberfläche
- 12: erste Schicht
- 13: zweite Schicht
- 15: funktionale Schicht
- 15a: Schlitz
- 16: Anordnungsbereich
- 17: Aussparung
- 18: Kavität
- 19: Ausnehmung
- 20: Chipmodul
- 21: Kontaktstruktur
- 30: Metallschicht
- 30a: Schlitz
- 31: Umfangsfläche
- 40: Hinterspritzungsschicht
- 41: Hinterspritzungsmaterial
- 100: erster Verfahrensschritt
- 110: zweiter Verfahrensschritt
- 120: dritter Verfahrensschritt

## Patentansprüche

1. Kartenförmiger Datenträger (10), insbesondere eine Smart Card, umfassend einen Kartenkörper (11) mit wenigstens einem Anordnungsbereich (16) zur Aufnahme eines Chipmoduls (20), wobei das Chipmodul (20) in dem Anordnungsbereich (16) des Kartenkörpers (11) angeordnet ist, wobei das Chipmodul (20) wenigstens einen Chip, eine Kontaktstruktur (21) und wenigstens eine Antenne umfasst, wobei der Kartenkörper (11) aus wenigstens zwei Schichten (12, 13) gebildet ist, wobei eine erste Schicht (12) als Metallschicht (30) mit wenigstens einem Schlitz (30a) ausgebildet ist, der sich von einer Umfangsfläche (31) der Metallschicht (30) bis in den Bereich des Anordnungsbereiches (16) für das Chipmodul (20) erstreckt und der sich durch die gesamte Dicke der Metallschicht (30) erstreckt, wobei eine zweite Schicht (13) mittels eines Hinterspritzungsverfahrens als Hinterspritzungsschicht (40) ausgebildet ist, welche ein Hinterspritzungsmaterial (41) umfasst, wobei die Hinterspritzungsschicht (40) an der Metallschicht (30) derart angeordnet ist, dass der Schlitz (30a) der Metallschicht (30) zumindest teilweise mit dem Hinterspritzungsmaterial (41) aufgefüllt ist
**dadurch gekennzeichnet, dass** zwischen der Metallschicht (30) und der Hinterspritzungsschicht (40) eine funktionale Schicht (15) angeordnet ist, an welcher wenigstens eine Komponente des Chipmoduls (20), insbesondere die Antenne des Chipmoduls (20), angeordnet ist, wobei die funktionale Schicht (15) einen dem Schlitz (30a) der Metallschicht (30) entsprechenden Schlitz (15a) aufweist, der sich von einer Umfangsfläche der funktionalen Schicht (15) bis in den Bereich des Anordnungsbereiches (16) für das Chipmodul (20) erstreckt und der sich durch die gesamte Dicke der funktionalen Schicht (15) erstreckt.

2. Kartenförmiger Datenträger (10) nach Anspruch 1, **dadurch gekennzeichnet, dass** sich die Hinterspritzungsschicht (40) zumindest teilweise, insbesondere vollständig, entlang der Metallschicht (30) erstreckt.

3. Kartenförmiger Datenträger (10) nach einem der vorhergehenden Ansprüche, **dadurch gekennzeichnet, dass** der Anordnungsbereich (16) zur Aufnahme des Chipmoduls (20) durch eine Aussparung (17) im Kartenkörper (11), insbesondere in der Metallschicht (30), gebildet ist, in der das Chipmodul (20) aufgenommen ist.

4. Kartenförmiger Datenträger (10) nach einem der vorhergehenden Ansprüche, **dadurch gekennzeichnet, dass** die Hinterspritzungsschicht (40) eine ausgeformte Kavität (18) zur Aufnahme von einer Elektronik des Chipmoduls (20) aufweist, insbesondere wobei die Kavität (18) unterhalb des Anordnungsbereichs (16) zur Aufnahme des Chipmoduls (20) angeordnet ist.

5. Kartenförmiger Datenträger (10) nach einem der vorhergehenden Ansprüche, **dadurch gekennzeichnet, dass** die Metallschicht (30) wenigstens eine Ausnehmung (19) aufweist, wobei die Ausnehmung (19) der Metallschicht (30) zumindest teilweise mit dem Hinterspritzungsmaterial (41) aufgefüllt ist.

6. Kartenförmiger Datenträger (10) nach Anspruch 5, **dadurch gekennzeichnet, dass** die Ausnehmung (19) im Bereich des Schlitzes (30a) angeordnet ist.

7. Kartenförmiger Datenträger (10) nach einem der Ansprüche 5 oder 6, **dadurch gekennzeichnet, dass** die Ausnehmung (19) kreisförmig ausgebildet ist oder dass mehrere Ausnehmungen (19) vorgesehen sind, wodurch ein optisches Logo darstellbar ist.

8. Kartenförmiger Datenträger (10) nach einem der vorhergehenden Ansprüche, **dadurch gekennzeichnet, dass** die Metallschicht (30) eine außenliegende Schicht des kartenförmigen Datenträgers (10) bildet oder dass eine dritte außenliegende Schicht vorgesehen ist, welche die Metallschicht (30) bedeckt.

9. Kartenförmiger Datenträger (10) nach Anspruch 8, **dadurch gekennzeichnet, dass** die dritte außenliegende Schicht mittels eines Hinterspritzungsverfahrens als zweite Hinterspritzungsschicht ausgebildet ist, welche ein Hinterspritzungsmaterial (41) umfasst, wobei die zweite Hinterspritzungsschicht an der Metallschicht (30) derart angeordnet ist, dass der Schlitz (30a) der Metallschicht (30) zumindest teilweise mit dem Hinterspritzungsmaterial (41) aufgefüllt ist.

10. Kartenförmiger Datenträger (10) nach Anspruch 8, **dadurch gekennzeichnet, dass** zwischen der dritten außenliegende Schicht und der Metallschicht (30) eine Klebstoffschicht angeordnet ist.

11. Verfahren zum Herstellen eines kartenförmigen Datenträgers (10) nach einem der vorhergehenden Ansprüche, wobei das Verfahren die folgenden Schritte umfasst:
- Bereitstellen der ersten Schicht (12) als Metallschicht (30) mit einem Schlitz (30a),
- Anordnen des Chipmoduls (20) in dem Anordnungsbereich (16);
- Hinterspritzen der Metallschicht (30) zur Ausbildung der zweiten Schicht (13) als Hinterspritzungsschicht (40), wobei die Hinterspritzungsschicht (40) an der Metallschicht (30) derart angeordnet wird, dass der Schlitz (30a) der Metallschicht (30) zumindest teilweise mit dem Hinterspritzungsmaterial (41) aufgefüllt wird.

## Claims

1. Card-type data carrier (10), in particular a smart card, comprising a card body (11) with at least one arrangement region (16) for receiving a chip module (20), wherein the chip module (20) is arranged in the arrangement region (16) of the card body (11), wherein the chip module (20) comprises at least one chip, a contact structure (21) and at least one antenna, wherein the card body (11) is formed from at least two layers (12, 13), wherein a first layer (12) is in the form of a metal layer (30) with at least one slit (30a), which extends from a circumferential surface (31) of the metal layer (30) into the region of the arrangement region (16) for the chip module (20) and which extends through the entire thickness of the metal layer (30), wherein an insert moulding process is used to form a second layer (13) as an insert moulded layer (40), which comprises an insert moulding material (41), wherein the insert moulded layer (40) is arranged on the metal layer (30) in such a way that the slit (30a) in the metal layer (30) is at least partially filled with the insert moulding material (41),
**characterized in that** a functional layer (15) on which at least one component of the chip module (20) is arranged, in particular the antenna of the chip module (20), is arranged between the metal layer (30) and the insert moulded layer (40), the functional layer (15) having a slit (15a) which corresponds to the slit (30a) in the metal layer (30), extends from a circumferential surface of the functional layer (15) into the region of the arrangement region (16) for the chip module (20), and extends through the entire thickness of the functional layer (15).

2. Card-type data carrier (10) according to Claim 1, **characterized in that** the insert moulded layer (40) extends at least partially, in particular completely, along the metal layer (30).

3. Card-type data carrier (10) according to either of the preceding claims, **characterized in that** the arrangement region (16) for receiving the chip module (20) is formed by a recess (17) in the card body (11), in particular in the metal layer (30), in which recess the chip module (20) is received.

4. Card-type data carrier (10) according to one of the preceding claims, **characterized in that** the insert moulded layer (40) has a moulded cavity (18) for receiving electronics of the chip module (20), in particular the cavity (18) being arranged below the arrangement region (16) for receiving the chip module (20).

5. Card-type data carrier (10) according to one of the preceding claims, **characterized in that** the metal layer (30) has at least one cutout (19), the cutout (19) in the metal layer (30) being at least partially filled with the insert moulding material (41).

6. Card-type data carrier (10) according to Claim 5, **characterized in that** the cutout (19) is arranged in the region of the slit (30a).

7. Card-type data carrier (10) according to either of Claims 5 and 6, **characterized in that** the cutout (19) is circular, or **in that** a plurality of cutouts (19) are provided so that a visual logo can be represented.

8. Card-type data carrier (10) according to one of the preceding claims, **characterized in that** the metal layer (30) forms an external layer of the card-type data carrier (10), or **in that** a third, external layer is provided, which covers the metal layer (30).

9. Card-type data carrier (10) according to Claim 8, **characterized in that** an insert moulding process is used to form the third, external layer as a second insert moulded layer, which comprises an insert moulding material (41), wherein the second insert moulded layer is arranged on the metal layer (30) in such a way that the slit (30a) of the metal layer (30) is at least partially filled with the insert moulding material (41).

10. Card-type data carrier (10) according to Claim 8, **characterized in that** an adhesive layer is arranged between the third, external layer and the metal layer (30).

11. Method for producing a card-type data carrier (10) according to one of the preceding claims, wherein the method comprises the following steps:
- providing the first layer (12) as a metal layer (30) with a slit (30a),
- arranging the chip module (20) in the arrangement region (16);
- insert moulding the metal layer (30) in order to form the second layer (13) as an insert moulded layer (40), the insert moulded layer (40) being arranged on the metal layer (30) in such a way that the slit (30a) in the metal layer (30) is at least partially filled with the insert moulding material (41).

## Revendications

1. Support de données (10) en forme de carte, en particulier carte à puce, comprenant un corps de carte (11) pourvu d'au moins une région d'agencement (16) destinée à recevoir un module de puce (20), ledit module de puce (20) étant disposé dans la région d'agencement (16) du corps de carte (11), le module de puce (20) comprenant au moins une puce, une structure de contact (21) et au moins une antenne, le corps de carte (11) étant constitué d'au moins deux couches (12, 13), une première couche (12) étant conçue sous forme d'une couche métallique (30) pourvue d'au moins une fente (30a) qui s'étend à partir d'une surface périphérique (31) de la couche métallique (30) dans la zone de la région d'agencement (16) destinée au module de puce (20) et qui s'étend à travers toute l'épaisseur de la couche métallique (30), une deuxième couche (13) étant produite au moyen d'un procédé de rétro-injection sous la forme d'une couche de rétro-injection (40), laquelle comprend un matériau de rétro-injection (41), la couche de rétro-injection (40) étant disposée sur la couche métallique (30) de telle sorte que la fente (30a) de la couche métallique (30) soit au moins partiellement remplie du matériau de rétro-injection (41),
**caractérisé en ce qu'**une couche fonctionnelle (15) est disposée entre la couche métallique (30) et la couche de rétro-injection (40), couche fonctionnelle sur laquelle est disposé au moins un composant du module de puce (20), en particulier l'antenne du module de puce (20), la couche fonctionnelle (15) présentant une fente (15a) correspondant à la fente (30a) de la couche métallique (30), laquelle fente s'étend à partir d'une surface périphérique de la couche fonctionnelle (15) dans la zone de la région d'agencement (16) destinée au module de puce (20) et s'étend à travers toute l'épaisseur de la couche fonctionnelle (15).

2. Support de données (10) en forme de carte selon la revendication 1, **caractérisé en ce que** la couche de rétro-injection (40) s'étend au moins partiellement, en particulier complètement, le long de la couche métallique (30).

3. Support de données (10) en forme de carte selon l'une quelconque des revendications précédentes, **caractérisé en ce que** la région d'agencement (16) destinée à recevoir le module de puce (20) est formée par un évidement (17) ménagé dans le corps de carte (11), en particulier dans la couche métallique (30), et dans lequel est reçu le module de puce (20).

4. Support de données (10) en forme de carte selon l'une quelconque des revendications précédentes, **caractérisé en ce que** la couche de rétro-injection (40) présente une cavité moulée (18) destinée à recevoir une électronique du module de puce (20), la cavité (18) étant en particulier disposée au-dessous de la région d'agencement (16) destinée à recevoir le module de puce (20).

5. Support de données (10) en forme de carte selon l'une quelconque des revendications précédentes, **caractérisé en ce que** la couche métallique (30) présente au moins un évidement (19), l'évidement (19) de la couche métallique (30) étant rempli au moins partiellement du matériau de rétro-injection (41).

6. Support de données (10) en forme de carte selon la revendication 5, **caractérisé en ce que** l'évidement (19) est disposé dans la zone de la fente (30a).

7. Support de données (10) en forme de carte selon l'une quelconque des revendications 5 ou 6, **caractérisé en ce que** l'évidement (19) est conçu sous forme circulaire ou **en ce qu'**il est prévu plusieurs évidements (19) permettant de représenter un logo optique.

8. Support de données (10) en forme de carte selon l'une quelconque des revendications précédentes, **caractérisé en ce que** la couche métallique (30) forme une couche extérieure du support de données (10) en forme de carte ou **en ce qu'**il est prévu une troisième couche extérieure qui recouvre la couche métallique (30).

9. Support de données (10) en forme de carte selon la revendication 8, **caractérisé en ce que** la troisième couche extérieure est réalisée au moyen d'un procédé de rétro-injection sous forme d'une deuxième couche de rétro-injection comprenant un matériau de rétro-injection (41), la deuxième couche de rétro-injection étant disposée sur la couche métallique (30) de telle sorte que la fente (30a) de la couche métallique (30) soit au moins partiellement remplie du matériau de rétro-injection (41).

10. Support de données (10) en forme de carte selon la revendication 8, **caractérisé en ce qu'**une couche adhésive est disposée entre la troisième couche extérieure et la couche métallique (30).

11. Procédé de production d'un support de données (10) en forme de carte selon l'une quelconque des revendications précédentes, dans lequel le procédé comprend les étapes suivantes :
- fournir la première couche (12) sous forme d'une couche métallique (30) pourvue d'une fente (30a),
- disposer le module de puce (20) dans la région d'agencement (16) ;
- rétro-injecter la couche métallique (30) pour former la deuxième couche (13) sous forme d'une couche de rétro-injection (40), la couche de rétro-injection (40) étant disposée sur la couche métallique (30) de telle sorte que la fente (30a) de la couche métallique (30) soit remplie au moins partiellement du matériau de rétro-injection (41).
